# EUROPEAN PATENT APPLICATION

(11) **EP 4 606 499 A1**
(43) Date of publication of application: **27.08.2025**
(21) Application number: 23891475.8
(22) Date of filing: 10.11.2023
(51) Int. Cl.: B21D 5/12, B21D 5/08, B21D 13/04, B21D 53/88

(54) **METHOD FOR MANUFACTURING FRAME COMPONENT MOLDED BY ROLL FORM MOLDING, AND FRAME COMPONENT**

(30) Priority: 15.11.2022 JP 2022182468
(71) Applicant: G-Tekt Corporation, Saitama-city, Saitama 330-0854 (JP)
(72) Inventor: ITOI, Hiroki, Hamura-shi, Tokyo 205-0023 (JP); ICHIMURA, Yasushi, Hamura-shi, Tokyo 205-0023 (JP)
(74) Representative: Samson & Partner Patentanwälte mbB
(86) International application number: PCT/JP2023/040539
(87) International publication number: WO 2024/106326

(57) **Abstract**

This invention provides a method for manufacturing a frame component (11) including a substantially rectangular contour (11a) in which a plurality of closed cross sections (12 - 14) are formed by roll-forming a plate material (3) made of a metal such that one end portion (15) is left outside and the other end portion (16) is arranged inside. The method includes a step of forming an abutment portion (31) having a T-shaped cross section by making the other end portion (16) of the plate material (3) abut against a first vertical wall (21). The method includes a step of performing welding from outside, thereby welding the other end portion (16) to the first vertical wall (21). It is possible to manufacture a frame component including a plurality of closed cross sections with high productivity.

## Description

### Technical Field

The present invention relates to a method for manufacturing a frame component formed by roll forming, and a frame component.

### Background Art

A part mounted in a vehicle such as an automobile needs to be supported by a firm frame component. A frame component of this type is described in, for example, patent literature 1. Patent literature 1 disclosures the frame component of a battery housing. As shown in Fig. 4 of patent literature 1, the frame component disclosed in patent literature 1 is formed by overlaying another plate-shaped flat plate portion on a plate material that is roll-formed such that a groove-shaped portion having a concave cross section and a convex portion having a convex cross section are arranged side by side and performing spot welding for the overlap portions. It is therefore impossible to form a closed cross section portion in which a plurality of frames having a rectangular cross section are continuously arranged.

The frame component of this type is demanded to have high rigidity against a load applied from sideward.

### Related Art Literature

### Non-Patent Literature

Patent Literature 1: Japanese Patent Laid-Open No. 2019-96385

### Disclosure of Invention

### Problem to be Solved by the Invention

The frame component shown in patent literature 1 is formed by overlaying a plurality of plate materials and performing welding at a plurality of welding positions. For this reason, productivity is high, but it is impossible to form a closed cross section portion in which a plurality of frames having a rectangular cross section are continuously arranged. Also, in the manufacturing method of the frame component described in patent literature 1, the number of manufacturing steps such as positioning of a plurality of plate materials and welding is large, and productivity is low.

It is the first object of the present invention to manufacture, with high productivity, a frame component including a plurality of adjacent closed cross sections, like a closed cross section portion in which a plurality of frames having a rectangular cross section are continuously arranged.

It is the second object of the present invention to provide a frame component that can be manufactured with high productivity and has high rigidity against a collision load from sideward.

### Means of Solution to the Problem

In order to achieve the object, according to the present invention, there is provided a method for manufacturing a frame component including a rectangular contour in which a plurality of closed cross sections are formed by roll-forming a plate material made of a metal and having one end portion and the other end portion such that the one end portion is left outside and the other end portion is arranged inside, comprising a step of forming an abutment portion having a T-shaped cross section by making the other end portion of the plate material partitioning the plurality of closed cross sections abut against one side wall of the frame component, and a step of performing welding from outside on an opposite side of the other end portion on the side wall against which the other end portion abuts, thereby welding the other end portion to the side wall.

According to the present invention, there is provided a frame component formed, by one metal plate material, into such a shape that a pair of horizontal walls and an intermediate partition wall are arranged between a pair of vertical walls, and a plurality of frames having a rectangular cross section are continuously arranged, wherein one end portion of the partition wall is made to abut against one vertical wall to form an abutment portion having a T-shaped cross section and welded to the one vertical wall, the other end portion of the partition wall is formed into a curved shape and continues to an inner vertical wall that is welded to the other vertical wall while being overlaid from inside, the inner vertical wall and the other vertical wall are overlaid and connected to each other to form a double wall, and connecting portions between the inner vertical wall and the vertical walls and the horizontal walls are bent into a curved shape.

### Effect of the Invention

According to the method for manufacturing a frame component formed by roll forming according to the present invention, roll forming is performed for one plate material, and welding is performed for the plate material, thereby forming a plurality of closed cross sections in the one plate material. Hence, according to the present invention, as compared to the conventional manufacturing method in which a plurality of plate materials are overlaid and welded, it is possible to manufacture a frame component including a plurality of closed cross sections with high productivity.

Also, in the frame component according to the present invention, when a collision load is applied from sideward, the curved portions adjacent to the double wall having a high strength are deformed while extending. Along with this deformation, the partition wall and the upper and lower horizontal walls are deflected. Hence, according to the present invention, it is possible to provide a frame component having a high energy absorption rate against a collision load from sideward.

### Brief Description of Drawings

Fig. 1 is a side view showing the schematic configuration of a roll forming machine;
Fig. 2 is a sectional view of a frame component;
Fig. 3 is a perspective view of the frame component;
Fig. 4 is a sectional view showing the basic shape portion of the frame component;
Fig. 5A is a sectional view of a plate material showing the process of roll forming stepwise;
Fig. 5B is a sectional view of the plate material showing the process of roll forming stepwise;
Fig. 5C is a sectional view of the plate material showing the process of roll forming stepwise;
Fig. 5D is a sectional view of the plate material showing the process of roll forming stepwise;
Fig. 5E is a sectional view of the plate material showing the process of roll forming stepwise;
Fig. 5F is a sectional view of the plate material showing the process of roll forming stepwise;
Fig. 5G is a sectional view of the plate material showing the process of roll forming stepwise;
Fig. 5H is a sectional view of the plate material showing the process of roll forming stepwise;
Fig. 5I is a sectional view of the plate material showing the process of roll forming stepwise;
Fig. 6A is a sectional view of the plate material showing the process of roll forming stepwise;
Fig. 6B is a sectional view of the plate material showing the process of roll forming stepwise;
Fig. 6C is a sectional view of the plate material showing the process of roll forming stepwise;
Fig. 6D is a sectional view of the plate material showing the process of roll forming stepwise;
Fig. 6E is a sectional view of the plate material showing the process of roll forming stepwise;
Fig. 6F is a sectional view of the plate material showing the process of roll forming stepwise;
Fig. 7 is a sectional view of the frame component showing a modification of an abutment portion;
Fig. 8 is a sectional view of the frame component showing a modification of the abutment portion;
Fig. 9 is a flowchart for explaining a manufacturing method of the frame component according to the present invention;
Fig. 10 is a flowchart for explaining a modification of the manufacturing method of the frame component according to the present invention;
Fig. 11 is a sectional view showing the abutment portion in an enlarged state;
Fig. 12 is a sectional view showing a modification of a fitted portion;
Fig. 13A is a sectional view for explaining a method of forming the fitted portion formed by a groove;
Fig. 13B is a sectional view for explaining a method of forming the fitted portion formed by a groove;
Fig. 14A is a sectional view showing the moving path of the fitted portion when a partition wall is fitted on the fitted portion;
Fig. 14B is a sectional view showing the moving path of the fitted portion when the partition wall is fitted on the fitted portion;
Fig. 15 is a sectional view for explaining the shape of a penetrated portion by laser welding;
Fig. 16 is a sectional view showing another embodiment of the fitted portion;
Fig. 17 is a side view of a formed product showing another embodiment of the fitted portion;
Fig. 18 is a flowchart showing another embodiment of an abutment portion forming method;
Fig. 19 is a sectional view of the frame component for explaining deformation that occurs when an impact load is applied; and
Fig. 20 is a sectional view of the frame component to which an additional component is connected.

### Best Mode for Carrying Out the Invention

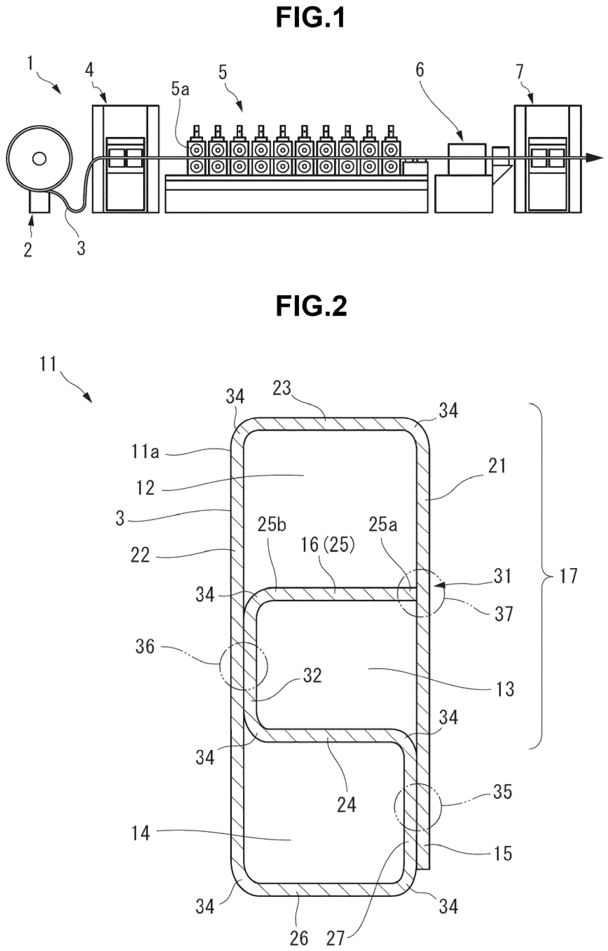

An embodiment of a method for manufacturing a frame component formed by roll forming according to the present invention and the frame component will now be described in detail with reference to Figs. 1 to 19.

A method for manufacturing a frame component formed by roll forming according to the present invention (to be simply referred to as a method for manufacturing a frame component hereinafter) can be performed using, for example, a roll forming machine 1 shown in Fig. 1. The roll forming machine 1 feeds a plate material 3 of a metal from an uncoiler 2 located at the leftmost position in Fig. 1 to the right side in Fig. 1, and manufactures a product having a predetermined shape. On the uncoiler 2, the plate material 3 of metal is attached while being wound in a coil shape.

On the downstream side in the feeding direction of the plate material 3 from the uncoiler 2, devices such as a pre-hole press 4, a multistage roll forming machine 5, a welding/cutting machine 6, and a post-hole press 7 are arranged in this order.

The pre-hole press 4 performs machining such as hole forming or cutting for the plate material 3.

The multistage roll forming machine 5 bends the plate material 3 into a predetermined shape using a lot of rolls 5a.

The welding/cutting machine 6 performs welding to a target welding portion of the plate material 3 after forming, and cuts the plate material 3 to a predetermined length, thereby producing a long-sized product.

The post-hole press 7 performs machining including hole forming for the plate material 3 after forming.

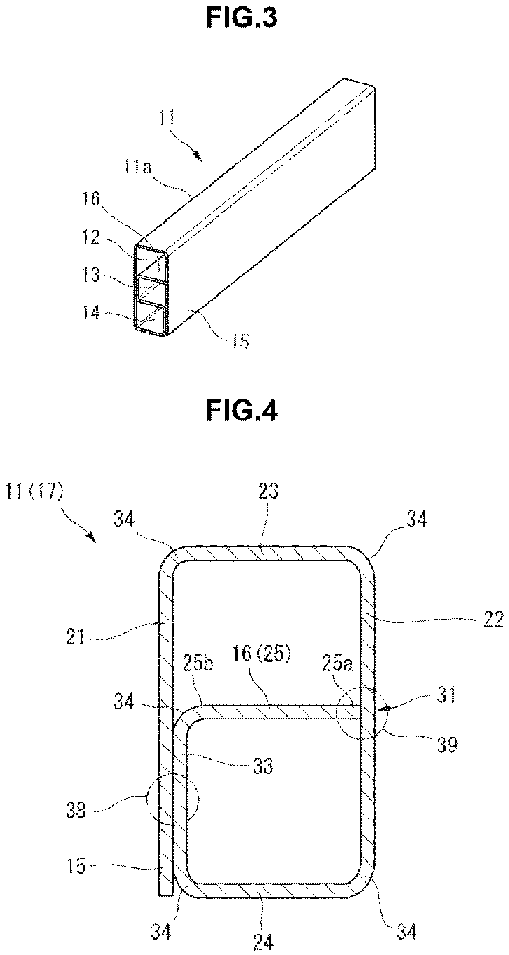

In this embodiment, an example in a case where a frame component 11 shown in Figs. 2 and 3 is formed using the roll forming machine 1 as described above will be described. The frame component 11 shown in Figs. 2 and 3 can be used as a component for supporting an in-vehicle part of an automobile (not shown) or the like or as a component forming a part of the contour of a vehicle body.

The frame component 11 shown in Fig. 2 includes a contour 11a having a substantially rectangular shape. A plurality of closed cross sections (first to third closed cross sections 12 to 14) are formed inside the contour 11a. The frame component 11 according to this embodiment is obtained by forming one metal plate material into a predetermined shape using a roll forming method. Forming performed using the roll forming method will simply be referred to as roll forming hereinafter. The roll forming is performed such that one end portion 15 of the plate material 3 drawn on the lower right side of Fig. 2 is left outside and the other end portion 16 is arranged inside. The frame component 11 according to this embodiment has a shape including a basic shape portion 17, in which three frames having a rectangular cross section are continuously arranged. "Continuously arranged" here indicates that a wall serving as a partition between two frames adjacent to each other is shared by both frames. The basic shape portion 17 has such a shape that the open portions of an alphabet E are closed, and is formed into such a shape that two frames having a rectangular cross section are continuously arranged.

The frame component 11 according to the present invention may be formed only by the basic shape portion 17, as shown in Fig. 4. Note that the one end portion 15 can be formed as an attachment flange when it is bent outward to protrude.

The basic shape portion 17 is formed into a shape having, between a pair of vertical walls 21 and 22, a pair of horizontal walls 23 and 24 and an intermediate partition wall 25. The frame component 11 shown in Fig. 2 is formed into a shape in which the pair of vertical walls 21 and 22 are extended to the lower side as compared to the basic shape portion 17 and a horizontal wall 26 is added to the lower side of the basic shape portion 17 such that three frames having a rectangular cross section are arranged.

The pair of vertical walls 21 and 22 are the first vertical wall 21 including the one end portion 15 of the plate material 3, and the second vertical wall 22 facing the first vertical wall 21. In this embodiment, the first vertical wall 21 is "one side wall of the frame component" or "one vertical wall" in the present invention. In addition, the second vertical wall 22 is "the other vertical wall" in the present invention.

The pair of horizontal walls 23 and 24 are first and second side walls that sandwich a partition wall 25 as the other end portion 16 of the plate material 3 from the vertical direction in Fig. 2. The first horizontal wall 23 connects the upper end portions of the first vertical wall 21 and the second vertical wall 22 shown in Fig. 2.

In the frame component 11 shown in Fig. 2, the horizontal wall added to the lower side of the basic shape portion 17 will be referred to as the third horizontal wall 26 hereinafter. The third horizontal wall 26 is connected to a first inner vertical wall 27 that overlaps the first vertical wall 21 from inside, and connected to the second horizontal wall 24 via the first inner vertical wall 27.

The partition wall 25 partitions between a plurality of closed cross sections (the first closed cross section 12 and the second closed cross section 13) and forms an abutment portion 31 having a T-shaped cross section in cooperation with the first vertical wall 21. More specifically, one end portion 25a of the partition wall 25 abuts against the first vertical wall 21 to form the abutment portion 31 having a T-shaped cross section. The other end portion 25b of the partition wall 25 of the frame component 11 shown in Fig. 2 is connected to a second inner vertical wall 32 that overlaps the second vertical wall 22 from inside. The other end portion 25b of the partition wall 25 of the frame component 11 shown in Fig. 4 is connected to a third inner vertical wall 33 that overlaps the first vertical wall 21 from inside. The third inner vertical wall 33 connects the partition wall 25 and the second horizontal wall 24. The second horizontal wall 24 shown in Fig. 4 connects the second vertical wall 22 and the third inner vertical wall 33.

In both the frame component 11 shown in Fig. 2 and the frame component 11 shown in Fig. 4, since these are formed by roll forming, curved portions 34 having a curved shape are formed at portions where the plate material 3 is bent substantially at a right angle.

The frame components 11 are formed by, after formed into the shapes shown in Figs. 2 and 4 by the roll forming method, welding overlap portions where the plate materials 3 overlap. Overlap portions in the frame component 11 shown in Fig. 2 are a first overlap portion 35 where the first vertical wall 21 and the first inner vertical wall 27 overlap, a second overlap portion 36 where the second vertical wall 22 and the second inner vertical wall 32 overlap, and a third overlap portion 37 where the first vertical wall 21 and the partition wall 25 overlap.

Overlap portions in the frame component 11 shown in Fig. 4 are a fourth overlap portion 38 where the first vertical wall 21 and the third inner vertical wall 33 overlap, and a fifth overlap portion 39 where the second vertical wall 22 and the partition wall 25 overlap.

As for the material of the plate material 3 used in this embodiment, an aluminum alloy, an iron-based alloy, or another metal material can be used. If an aluminum alloy is used, the plate is thicker than a steel plate. Hence, the welding ranges of the third overlap portion 37 where the first vertical wall 21 and the partition wall 25 overlap and the fifth overlap portion 39 where the second vertical wall 22 and the partition wall 25 overlap are wide, and welding from outside can easily be performed. Welding can be performed by, for example, laser welding that can weld from outside of a closed cross section.

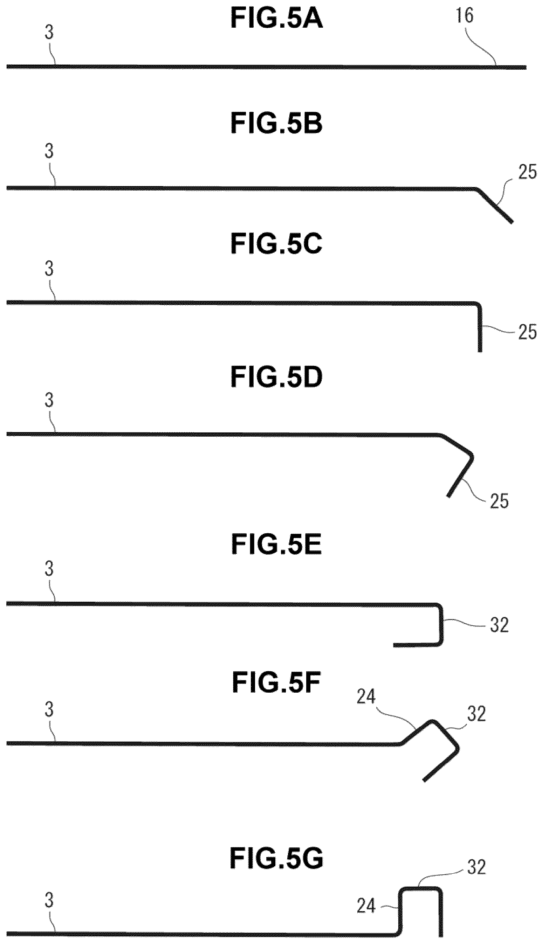

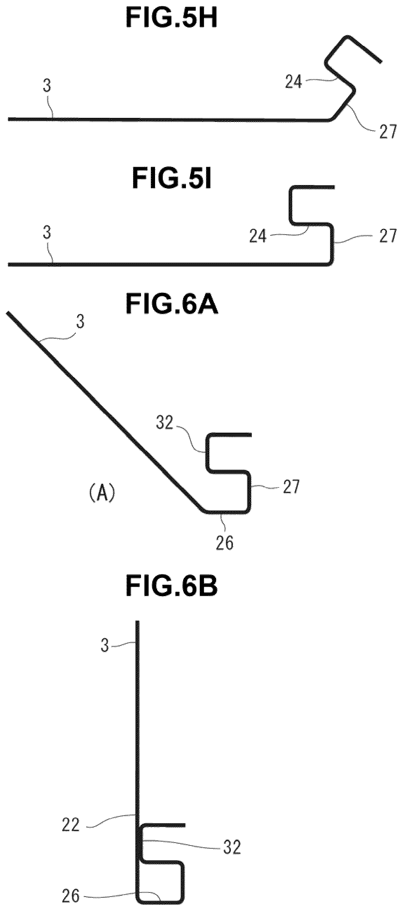

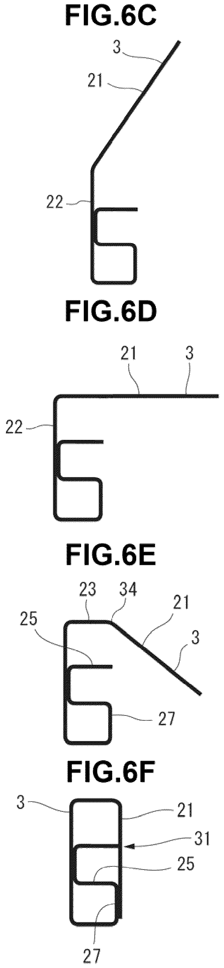

The forming order when forming the frame component 11 shown in Fig. 2 by the roll forming method is as shown in, for example, Figs. 5A to 5I and Figs. 6A to 6F. Roll forming is performed by the multistage roll forming machine 5 of the roll forming machine 1 shown in Fig. 1. Figs. 5A to 5I and Figs. 6A to 6F are sectional views of the plate material 3 viewed from the longitudinal direction.

To form the frame component 11, first, as shown in Figs. 5A to 5I, the other end portion 16 of the plate material 3 in a flat plate state is bent, and the partition wall 25, the second inner vertical wall 32, the second horizontal wall 24, and the first inner vertical wall 27 are formed in this order. The radius of curvature of the curved portion 34 between, for example, the partition wall 25 and the second inner vertical wall 32 can be adjusted by the multistage roll forming machine 5 in accordance with rigidity and collision performance. For example, if the radius of curvature of the curved portion 34 of the partition wall 25 is set large, sectional collapse can be promoted. Then, as shown in Figs. 6A to 6F, the third horizontal wall 26, the second vertical wall 22, the first horizontal wall 23, and the first vertical wall 21 are formed in this order.

More specifically, in the step shown in Fig. 6B, the second vertical wall 22 and the second inner vertical wall 32 are overlaid to form a double wall. In the step shown in Fig. 6E, the horizontal wall 23 is bent while forming the curved portion 34, thereby forming the first vertical wall 21. Then, in the step shown in Fig. 6F, the first vertical wall 21 is overlaid on the distal end of the partition wall 25 and the first inner vertical wall 27 to form the abutment portion 31, and roll forming is thus ended. Note that although not illustrated, after the second vertical wall 22 is overlaid on the second inner vertical wall 32 in the step shown in Fig. 6B, a step of bending the second vertical wall 22 to the left side in Fig. 6B to form a frame having a rectangular cross section on the upper portion of the contour 11a on the left side in Fig. 6B can be added.

The frame having a rectangular cross section is formed by bending the second vertical wall 22 clockwise in Fig. 6B. Finally, forming is performed such that the second vertical wall 22 in a state in which it extends downward is made to overlap the above-described portion bent to the left side, thereby adding a closed cross section to the outside as well. After the frame having a rectangular cross section is thus formed, the second vertical wall 22 is bent such that its distal end is directed rightward in Fig. 6B, thereby obtaining the state shown in Fig. 6D.

Also, during formation shown in each of Figs. 6B and 6F, laser welding can be performed for the first to third overlap portions 35 to 37.

In this embodiment, after roll forming is performed, as described above, the first to third overlap portions 35 to 37 of the frame component 11 are welded. Of the first to third overlap portions 35 to 37, the first and second overlap portions 35 and 36 are in a surface contact state in which two plate materials 3 overlap in the thickness direction and, therefore, welding can be performed easily and correctly. However, in the third overlap portion 37, the partition wall 25 abuts against the first vertical wall 21 to form a T shape. If the partition wall 25 tilts with respect to the first vertical wall 21 due to an error or spring back at the time of forming, positioning is not done, and the surface contact state may not be obtained.

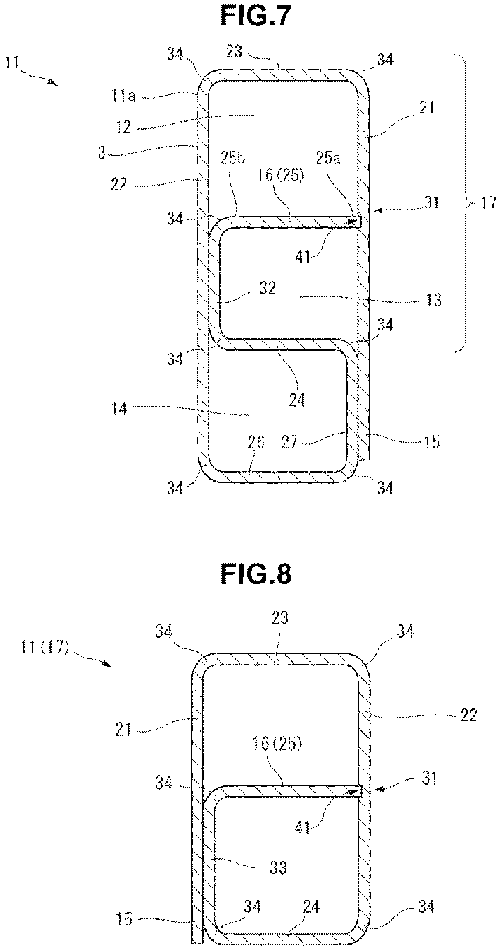

To prevent the tilt of the partition wall 25 as described above, as shown in Figs. 7 and 8, a fitted portion 41 in which the partition wall 25 is fitted is formed in the first vertical wall 21 or the second vertical wall 22. When this configuration is employed, the position deviation or tilt of the partition wall 25 is automatically corrected in the forming process, and the abutment portion 31 is correctly formed. The fitted portion 41 will be described later.

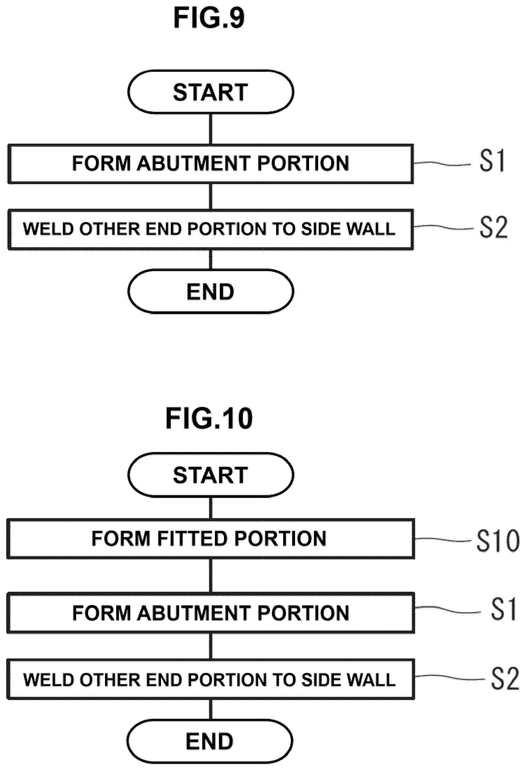

A manufacturing method of the frame component 11 formed by roll forming according to this embodiment is performed as shown in the flowchart of Fig. 9. That is, the manufacturing method is performed by step S1 of causing the partition wall 25 to abut against the first vertical wall 21 (the second vertical wall 22 in the frame component 11 shown in Fig. 4) to form the abutment portion 31 having a T-shaped cross section, and step S2 of welding the partition wall 25 (the other end portion 16 of the plate material 3) to the side wall {the first vertical wall 21 (the second vertical wall 22 in the frame component 11 shown in Fig. 4)} in or after the line of the roll forming machine 1. When welding the partition wall 25 to the first vertical wall 21 (the second vertical wall 22 in the frame component 11 shown in Fig. 4), welding is performed on the first and second overlap portions 35 and 36 (the fourth overlap portion 38 in the frame component 11 shown in Fig. 4) as well.

On the other hand, a manufacturing method when the fitted portion 41 shown in Figs. 7 and 8 is used is performed as shown in the flowchart of Fig. 10. That is, first, before step S1 of forming the abutment portion 31 having a T-shaped cross section, step S10 of forming, in the plate material 3, the fitted portion 41 in which the partition wall 25 is fitted is performed. In this case, step S1 of forming the abutment portion 31 is performed by bending the plate material 3 during roll forming and thus making the partition wall 25 abut against the first vertical wall 21 and fitted in the fitted portion 41.

Here, the structure of the fitted portion 41 will be described in detail. The fitted portion 41 of the frame component 11 shown in Fig. 7 will be described here, and the fitted portion 41 of the frame component 11 shown in Fig. 8 employs the same structure.

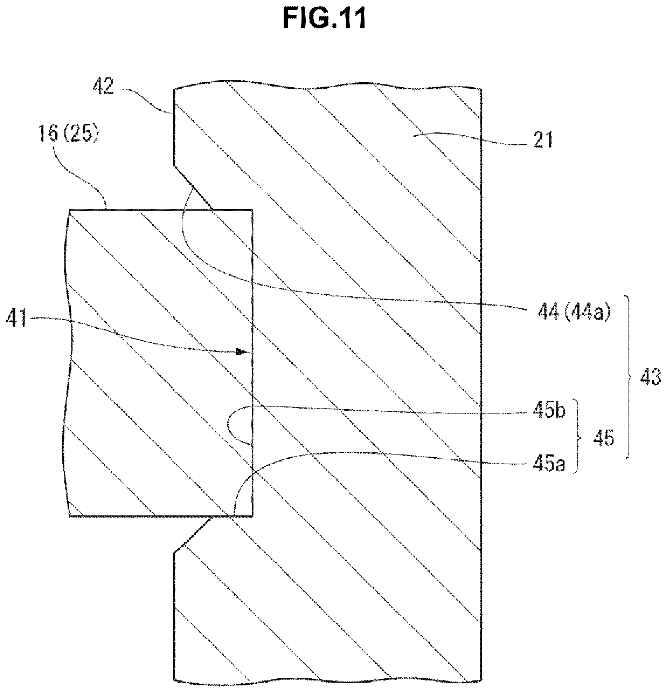

In step S10 of forming the fitted portion 41, as shown in Fig. 11, the fitted portion 41 is formed at a position of a side surface 42 of the first vertical wall 21 overlapping the partition wall 25. The fitted portion 41 shown in Fig. 11 is formed by a groove 43 in which the distal end portion of the partition wall 25 is fitted.

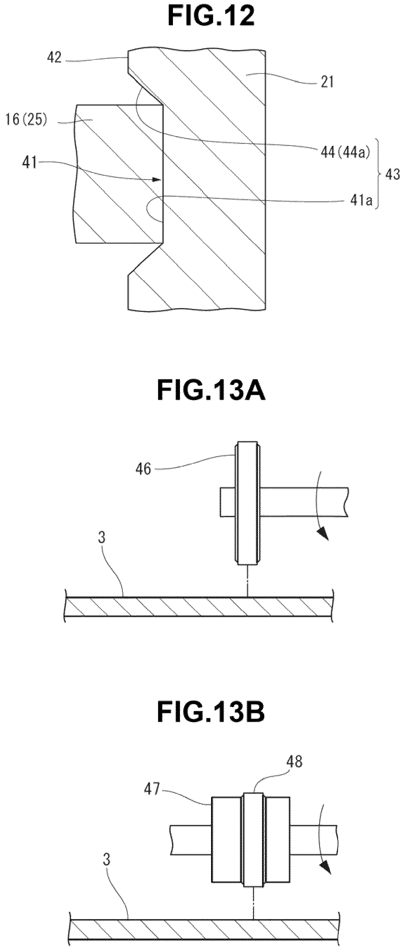

The groove 43 can be formed by performing, for example, cutting for the plate material 3 in the pre-hole press 4 of the roll forming machine 1. The groove 43 shown in Fig. 11 is formed by a guide shape portion 44 connected to the inner side surface 42 of the first vertical wall 21, and a groove bottom portion 45 connected to the guide shape portion 44. The guide shape portion 44 is formed by a tilting surface 44a extending from the side surface 42 into the fitted portion 41. The tilting surface 44a tilts such that the opening width of the fitted portion 41 gradually becomes large toward the outside of the fitted portion 41. The groove bottom portion 45 is formed by a side surface 45a extending in the depth direction of the groove 43, and a bottom surface 45b serving as the groove bottom, and is formed such that the groove has an angular C-shaped cross section. The groove bottom portion 45 has a groove width to fit on the distal end portion of the partition wall 25. Note that the guide shape portion 44 can be formed as shown in Fig. 12.

The guide shape portion 44 shown in Fig. 12 is formed on the entire region of the side wall of the groove 43, and extends from the side surface 42 of the first vertical wall 21 to the bottom of the fitted portion 41. That is, the fitted portion 41 shown in Fig. 12 is formed by the side wall made of the guide shape portion 44, and the groove 43 made of a bottom surface 41a. The guide shape portion 44 is also formed by the tilting surface 44a.

The fitted portion 41 shown in Fig. 11 and 12 can be formed by cutting or forming.

When forming the fitted portion 41 by cutting, as shown in Fig. 13A, a rotating cutting tool 46 is pressed against the plate material 3.

When forming the fitted portion 41 by forming, as shown in Fig. 13B, a roll 47 for groove formation is pressed against the plate material 3. The roll 47 for groove formation is provided in the multistage roll forming machine 5, and includes a groove working portion 48 provided on the outer peripheral portion. When the roll 47 is pressed against the plate material 3 and rotated, the shape of the groove working portion 48 is transferred to the plate material 3 to form the fitted portion 41. Note that the groove 43 has such a shape that only the inner surface (side surface 42) is recessed. However, a convex shape may be exposed to the outer surface of the portion where the recess is formed. If the convex shape is exposed, it serves as a mark for laser welding.

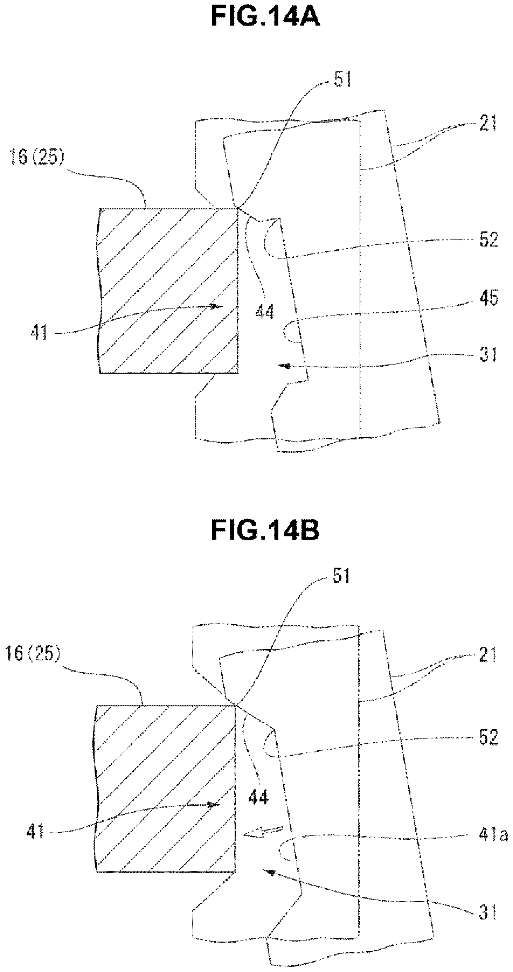

Step S1 of forming the abutment portion in the manufacturing method of the frame component 11 shown in Fig. 10 is performed in the process of bending the plate material 3 by the multistage roll forming machine 5. That is, when the first vertical wall 21 moves, from the state shown in Fig. 6E, toward the partition wall 25 and abuts against the partition wall 25, as shown in Fig. 6F, the first vertical wall 21 moves as indicated by an alternate long and two short dashed line in Figs. 14A and 14B, and the partition wall 25 is fitted in the fitted portion 41. During the process of fitting, an angle portion 51 formed at the distal end of the partition wall 25 comes into contact with the guide shape portion 44, and the guide shape portion 44 slips. While the guide shape portion 44 slips against the angle portion 51, the partition wall 25 is guided into the fitted portion 41. When the partition wall 25 is fitted in the fitted portion 41, the abutment portion 31 having a T-shaped cross section is formed.

If the groove bottom portion 45 is formed in the fitted portion 41, as shown in Fig. 14A, in the process of making the partition wall 25 fit, immediately after passing the guide shape portion 44, the angle portion 51 is fitted in a corner portion 52 of the groove bottom portion 45. Then, the first vertical wall 21 tilts clockwise in Fig. 14A with respect to the corner portion 52 as the center, and the partition wall 25 is fitted in the groove bottom portion 45. Note that the guide shape portion 44 facilitates fitting and increases position accuracy. Even if the guide shape portion 44 is not formed, position accuracy can be increased by setting a clearance and forming each of the end face of the partition wall 25 and the bottom surface 45b of the groove 43 into a fitting shape having a V-shaped cross section.

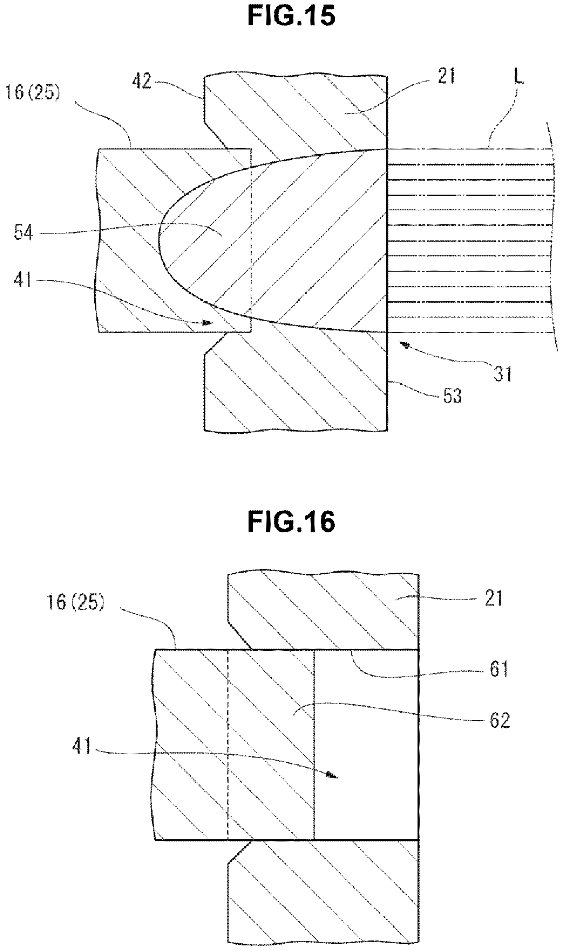

Step S2 of welding in the manufacturing method of the frame component 11 shown in Figs. 9 and 10 is performed from outside of the first vertical wall 21 (the second vertical wall 22 in the frame component shown in Fig. 4) on the opposite side of the partition wall 25. That is, as shown in Fig. 15, the abutment portion 31 having a T-shaped cross section is irradiated with a laser beam L from outside of the frame component 11 (from the opposite side of the partition wall 25), thereby executing welding. Fig. 15 shows the abutment portion 31 in a case where the fitted portion 41 is used, and the same applies to a case where wall surfaces are welded to each other.

A position, corresponding to the fitted portion 41, on an outer side surface 53 of the first vertical wall 21 is irradiated with the laser beam L. When the abutment portion 31 is thus irradiated with the laser beam L, a part of the first vertical wall 21 and a part of the partition wall 25 are melted and mixed, and these are welded. When laser welding is performed, a penetrated portion 54 having a warhead shape indicated by backward diagonal hatching in Fig. 15 is generated. The warhead shape of the penetrated portion 54 is a convex shape extending from the laser irradiation surface (side surface 53) to the partition wall 25. By the penetrated portion having a warhead shape, the partition wall 25 readily falls against a load from the laser irradiation direction, and when the partition wall 25 falls, the load readily concentrates to the curved portion 34, and an impact absorption amount to be described later increases.

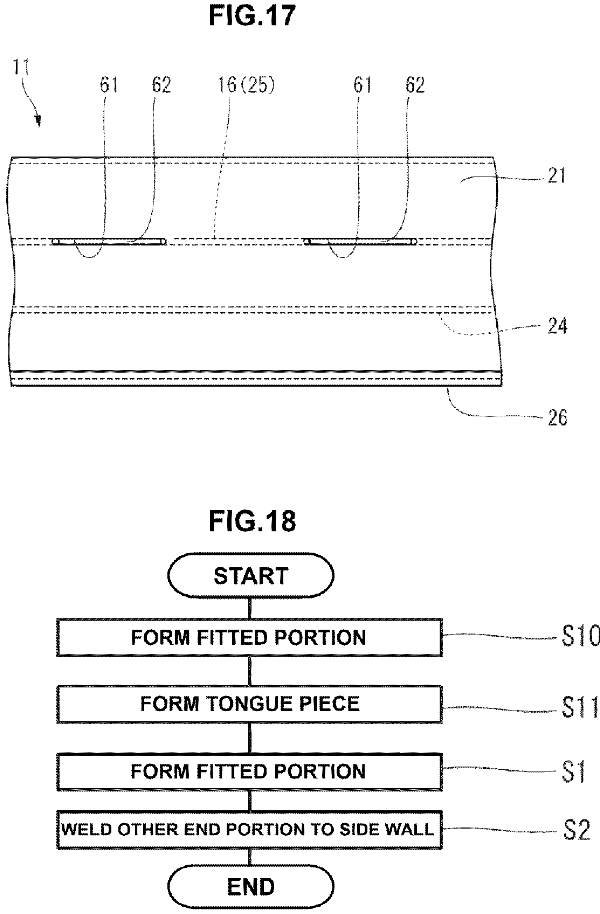

The fitted portion 41 can be formed as shown in Fig. 16. The fitted portion 41 shown in Fig. 16 is formed by a slit hole 61 extending the first vertical wall 21 (the second vertical wall 22 in the frame component 11 shown in Fig. 4) in the thickness direction. The slit hole 61 can be formed by, for example, performing punching for the plate material 3 in the pre-hole press 4 of the roll forming machine 1. As shown in Fig. 17, the slit hole 61 is formed as a long hole extending in the longitudinal direction of the frame component 11. Also, the slit holes 61 are formed to be arranged at a predetermined interval in the longitudinal direction of the frame component 11.

A tongue piece 62 that is fitted in the slit hole 61 is formed on the partition wall 25 in a case where the embodiment is employed. Like the slit hole 61, the tongue piece 62 can be formed by, for example, performing punching for the plate material 3 in the pre-hole press 4 of the roll forming machine 1.

A manufacturing method of the frame component 11 in a case where the fitted portion 41 is formed by the slit hole 61 is performed as shown in the flowchart of Fig. 18. That is, before step S1 of forming the abutment portion 31, step S11 of forming the tongue piece 62 at the end portion of the plate material 3 is performed. The slit hole 61 is formed in step S10 of forming the fitted portion. In Fig. 18, step S11 of forming the tongue piece is located after step S10 of forming the fitted portion. If these working steps are performed by the pre-hole press 4, these steps are performed substantially simultaneously.

After the slit hole 61 and the tongue piece 62 are formed on the plate material 3, in step S1 of forming the abutment portion 31, the tongue piece 62 is fitted in the slit hole 61. After that, the tongue piece 62 is welded to the hole wall of the slit hole 61 (the first vertical wall 21 of the frame component 11 shown in Fig. 2 or the second vertical wall 22 of the frame component 11 shown in Fig. 4). Since the tongue piece 62 is exposed to the opening portion of the slit hole 61, the welding is not limited to laser welding, and any welding method can be performed. Note that when a hole like the slit hole 61 is formed in the abutment portion 31, welding quality can easily be confirmed, including a case where the welding method shown in Fig. 15 is adopted. In addition, the tongue piece 62 can be extended and joined to another member outside the side wall.

In the manufacturing method of the frame component 11 formed as described above, roll forming is performed for one plate material 3, and welding is performed for the plate material 3, thereby forming a plurality of adjacent closed cross sections. Hence, according to this embodiment, it is possible to manufacture, with high productivity, a frame component including a plurality of closed cross sections, as compared to a conventional manufacturing method in which a plurality of plate materials are overlaid and welded.

If the form in which the fitted portion 41 is used is employed, in the process of forming the plate material 3, the other end portion 16 (partition wall 25) of the plate material 3 is fitted in the fitted portion 41 of the first vertical wall 21 (the second vertical wall 22 in the frame component 11 shown in Fig. 4). For this reason, when making the end portion of the plate material 3 abut against the side surface of the plate material 3 inside the contour 11a and welding from the outside of the contour, the welding can correctly be performed because positioning of the welding part is already done. The positioning of the welding part can easily be performed because it is automatically performed in the process of forming. Hence, according to this embodiment, since it is easy to position the other end portion 16 when making the other end portion 16 (partition wall 25) of the plate material 3 abut against the first vertical wall 21 and welding, a frame component that can easily be manufactured can be provided.

The fitted portion 41 according to this embodiment includes the guide shape portion 44 connected to the side surface 42 of the first vertical wall 21. In the manufacturing method of the frame component 11 according to this embodiment, in step S1 of forming the abutment portion 31 (the step of fitting the end portion of the plate material 3 in the fitted portion 41), the guide shape portion 44 slips while the angle portion 51 formed at the distal end of the partition wall 25 is in contact with the guide shape portion 44, thereby guiding the partition wall 25 into the fitted portion 41. For this reason, since the first vertical wall 21 tilts with respect to the angle portion 51 as the center, and the partition wall 25 is fitted in the fitted portion 41, the partition wall 25 is reliably fitted in the fitted portion 41.

The guide shape portion 44 according to this embodiment is formed by the tilting surface 44a extending from the side surface 42 of the first vertical wall 21 into the fitted portion 41. For this reason, since the partition wall 25 of the plate material 3 is fitted in the fitted portion 41 while slipping against the tilting surface 44a, the fitting operation is smooth, and fitting can be done more correctly. In addition, it is possible to prevent abrasion powder from being generated during forming.

According to the manufacturing method of the frame component 11, in which in step S10 of forming the fitted portion 41, the groove 43 is formed as the fitted portion 41 in the side surface 42 of the plate material 3 and the other end portion 16 of the plate material 3 is fitted in the groove 43, the partition wall 25 can be positioned only by simple working of forming the groove 43 in the plate material 3. It is therefore possible to implement a frame component manufacturing method that can easily be performed. In addition, since the groove wall of the groove 43 regulates movement of the partition wall 25 of the plate material 3, it is possible to reliably fix the partition wall 25 to the first vertical wall 21 (the second vertical wall 22 in the frame component 11 shown in Fig. 4) even if the welding strength is low, as compared to a case where welding is performed in a simple abutment state without using the groove 43. Also, the groove 43 decreases the plate thickness of the fitted portion 41 of the first vertical wall 21. For this reason, since the portion serves as a mark for welding to the partition wall 25 when viewed from outside, the welding position from outside can easily be grasped. A peep hole may be formed in the first vertical wall 21 to confirm the fitted portion 41.

If the groove 43 is formed by performing cutting for the plate material 3, the groove 43 can be worked in the plate material 3 in a flat plate state before the start of roll forming. It is therefore possible to increase the accuracy of the position and size of the groove 43.

If the groove 43 is formed by pressing the roll 47 including the groove working portion 48 provided on the outer peripheral portion against the plate material 3 and transferring the shape of the groove working portion 48 to the plate material 3, no chip powder is generated, unlike a case where the groove 43 is formed by cutting. For this reason, the work of removing chip powder from the surface of the plate material 3 is unnecessary, and groove working can easily be performed.

According to the manufacturing method of the frame component, in which before step S1 of forming the abutment portion 31, the tongue piece 62 is formed on the other end portion 16 (partition wall 25) of the plate material 3, and the tongue piece 62 is fitted in the fitted portion 41 formed by the slit hole 61, welding can be performed from the opening portion of the slit hole 61. It is therefore possible to employ an optimum welding method and reliably perform welding.

If the welding between the other end portion 16 (partition wall 25) of the plate material 3 and the plate material 3 (first vertical wall 21) is performed by laser welding, and the shape of the penetrated portion 54 formed by the laser welding is a warhead shape extending from the laser irradiation surface (side surface 53) to the end portion of the plate material 3, it is possible to form the abutment portion 31 having a T-shaped cross section with a high welding strength.

In the above-described embodiment, the plate material 3 made of an aluminum alloy is used, and the plate material 3 is bent to a predetermined shape by the roll forming method. When an aluminum alloy is used as the material of the plate material 3, a thick plate material 3 can be used as compared to a case where a steel material is used. For this reason, since the other end portion 16 of the plate material 3 is reliably fitted in the fitted portion 41, the other end portion 16 of the plate material 3 can be positioned more reliably. When the aluminum material is applied, the frame component 11 can be made lightweight.

The frame component 11 according to this embodiment is a frame component including the basic shape portion 17 that is formed into such a shape that a pair of horizontal walls (the first horizontal wall 23 and the second horizontal wall 24) and the intermediate partition wall 25 are provided between a pair of vertical walls (the first vertical wall 21 and the second vertical wall 22) using one plate material 3 made of a metal, that is, a plurality of frames having a rectangular cross section continue. The one end portion 25a of the partition wall 25 is made to abut against one vertical wall (the first vertical wall 21 or the second vertical wall 22) to form the abutment portion 31 having a T-shaped cross section and welded to the one vertical wall, and the other end portion 25b is formed into a curved shape and connected to an inner vertical wall (the second inner vertical wall 32 or the third inner vertical wall 33) that is welded to the other vertical wall (the second vertical wall 22 or the first vertical wall 21) while being overlaid from inside. The connecting portions between the inner vertical wall and the vertical walls and the horizontal walls are bent into a curved shape to form the curved portions 34. The inner vertical wall and the vertical wall are overlaid and connected, thereby forming a double wall.

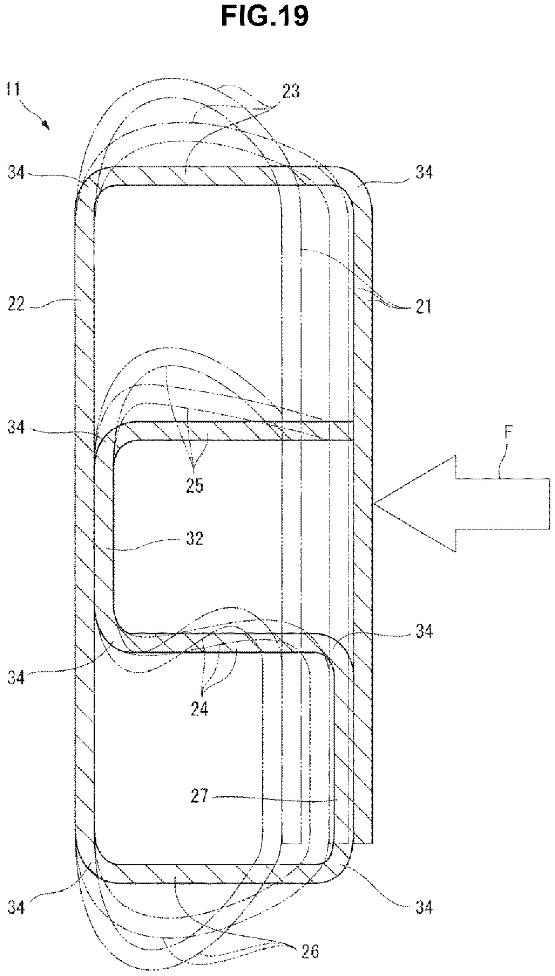

According to the thus formed frame component 11, when an impact load is applied to the first vertical wall 21 or the second vertical wall 22 from sideward, the first to third horizontal walls 23, 24, and 26 and the partition wall 25 can be deformed to absorb impact energy. For example, as shown in Fig. 19, when an impact load F is applied to the first vertical wall 21 of the frame component 11 from sideward, the first vertical wall 21 displaces to move close to the second vertical wall 22, as indicated by an alternate long and two short dashed line in Fig. 19. At this time, since the partition wall 25 is firmly supported by the double wall formed by overlaying and connecting the inner vertical wall (second inner vertical wall 32) and the vertical wall (second vertical wall 22), stress is concentrated to the curved portions 34 to deform the curved portions 34 such that the radius of curvature increases. The curved portions 34 of the partition wall 25 serve as a trigger, and the remaining first to third horizontal walls 23, 24, and 26 tilt to increase the radius of curvature of the curved portions 34.

Since the radius of curvature increases in many curved portions 34, and the walls are deformed as a whole, the energy absorption amount significantly increases.

Although not illustrated, the frame component 11 can be used as a long-sized frame component such as a crossmember or a side frame of a battery housing, or a side sill, a floor crossmember, a front side frame, or a center pillar of a vehicle body contour. Note that the frame component 11 is not limited to a linear shape as shown in Fig. 3, and may be curved by roll forming.

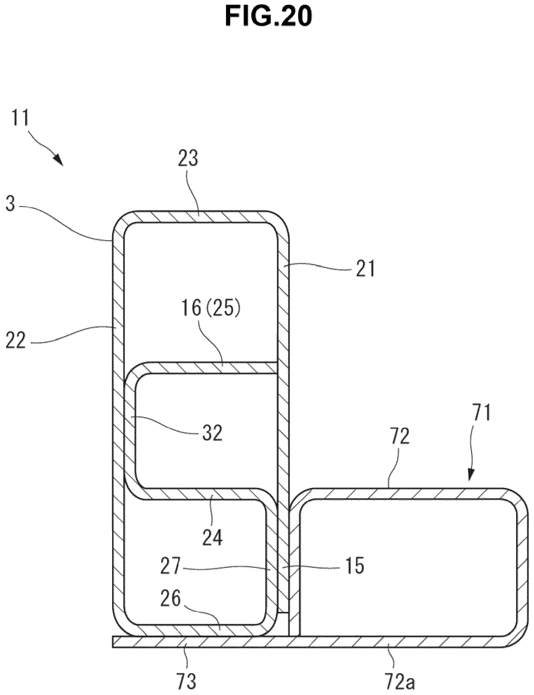

As shown in Fig. 20, a closed cross section constituent body 71 can be welded to the frame component 11 according to the present invention. The closed cross section constituent body 71 shown in Fig. 20 is formed into a polygonal tube shape by an extrusion molding method or roll forming method using an aluminum alloy as a material, and includes an attachment plate 73 projecting sideward from a portion that forms a bottom wall 72a of a polygonal tube 72. The attachment plate 73 is overlaid on the third horizontal wall 26 of the frame component 11 and welded.

When the configuration shown in Fig. 20 is employed, a battery housing can be attached to the lower surface of a side sill via the closed cross section constituent body 71, and if a collision load is applied from sideward where the closed cross section constituent body 71 is located, the impact energy absorption amount further increases.

### (Supplementary Notes)

Feature items of a method for manufacturing a frame component formed by roll forming according to the above-described embodiment, and a frame component are as follows.

### (Feature Item 1)

A method for manufacturing a frame component formed by roll forming according to the above-described embodiment is a method for manufacturing a frame component 11 including a rectangular contour 11a in which a plurality of closed cross sections 12 to 14 are formed by roll-forming a plate material 3 made of a metal and having one end portion 15 and the other end portion 16 such that the one end portion 15 is left outside and the other end portion 16 is arranged inside, comprising a step S1 of forming an abutment portion 31 having a T-shaped cross section by making the other end portion 16 of the plate material 3 partitioning the plurality of closed cross sections abut against one side wall (first vertical wall 21) of the frame component 11, and a step S2 of performing welding from outside on an opposite side of the other end portion 16 on the side wall against which the other end portion 16 abuts, thereby welding the other end portion 16 to the side wall.

### (Feature Item 2)

In the method for manufacturing a frame component formed by roll forming according to (Feature Item 1), before the step S1 of forming the abutment portion 31 having the T-shaped cross section, a step S10 of forming, in the plate material 3, a fitted portion 41 in which the other end portion 16 is fitted is performed, and the step S1 of forming the abutment portion 31 having the T-shaped cross section is performed by bending the plate material 3 and thus making the other end portion 16 abut against the side wall (first vertical wall 21) and fitted in the fitted portion 41.

### (Feature Item 3)

In the method for manufacturing a frame component formed by roll forming according to (Feature Item 2), the fitted portion 41 includes a guide shape portion 44 connected to a side surface 42 of the side wall (first vertical wall 21), and in the step S1 of forming the abutment portion 31, an angle portion 51 formed at a distal end of the end portion 16 slips along the guide shape portion 44, thereby guiding the end portion 16 into the fitted portion 41.

### (Feature Item 4)

In the method for manufacturing a frame component formed by roll forming according to (Feature Item 3), the guide shape portion 44 is formed by a tilting surface 44a extending from the side surface 42 into the fitted portion 41.

### (Feature Item 5)

In the method for manufacturing a frame component formed by roll forming according to (Feature Item 2), in the step S10 of forming the fitted portion 41, a groove 43 is formed as the fitted portion 41 in a side surface of the plate material 3, and in the step of fitting the end portion 16 in the fitted portion 41 (step S1 of forming the abutment portion 31), the end portion 16 is fitted in the groove 43.

### (Feature Item 6)

In the method for manufacturing a frame component formed by roll forming according to (Feature Item 5), the groove 43 is formed by performing cutting for the plate material 3.

### (Feature Item 7)

In the method for manufacturing a frame component formed by roll forming according to (Feature Item 5), the groove 43 is formed by pressing a roll 47 including a groove working portion 48 provided on an outer peripheral portion against the plate material 3, rotating the roll, and transferring a shape of the groove working portion 48 to the plate material 3.

### (Feature Item 8)

In the method for manufacturing a frame component formed by roll forming according to (Feature Item 2), the method further comprises a step S11 of forming a tongue piece 62 at the end portion 16 of the plate material 3 before the step S1 of forming the abutment portion 31, in the step S10 of forming the fitted portion 41, a slit hole 61 extending through the plate material 3 in a thickness direction is formed as the fitted portion 41, and in the step S1 of forming the abutment portion 31, the tongue piece 62 is fitted in the slit hole 61.

### (Feature Item 9)

In the method for manufacturing a frame component formed by roll forming according to (Feature Item 2), the step S2 of welding the end portion 16 to the fitted portion 41 is performed by laser welding, and a shape of a penetrated portion 54 formed by the laser welding is a warhead shape extending from a laser irradiation surface to the end portion 16.

### (Feature Item 10)

In the method for manufacturing a frame component formed by roll forming according to (Feature Item 1), as the plate material 3, a plate material made of an aluminum alloy is used, and the step S1 of forming the abutment portion 31 is performed by roll forming.

### (Feature Item 11)

A frame component 11 according to the above-described embodiment is a frame component 11 formed, by one metal plate material 3, into such a shape that a pair of horizontal walls 23 and 26 and an intermediate partition wall 25 are arranged between a pair of vertical walls 21 and 22, and a plurality of frames having a rectangular cross section are continuously arranged, wherein one end portion 25a of the partition wall 25 is made to abut against one vertical wall (the first vertical wall 21 or the second vertical wall 22) to form an abutment portion 31 having a T-shaped cross section and welded to the one vertical wall, the other end portion 25b of the partition wall 25 is formed into a curved shape and continues to an inner vertical wall (the second inner vertical wall 32 or the third inner vertical wall 33) that is welded to the other vertical wall while being overlaid from inside, the inner vertical wall and the other vertical wall are overlaid and connected to each other to form a double wall, and connecting portions between the inner vertical wall and the vertical walls 21 and 22 and the horizontal walls 23, 24, and 26 are bent into a curved shape.

### (Feature Item 12)

In the frame component 11 according to (Feature Item 11), a fitted portion 41 in which the distal end portion (one end portion 25a) of the partition wall 25 is fitted is formed in the one vertical wall (the first vertical wall 21 or the second vertical wall 22), and the distal end portion of the partition wall 25 is welded in a state in which the distal end portion is fitted in the fitted portion 41.

### (Feature Item 13)

In the frame component 11 according to (Feature Item 12), the fitted portion 41 is formed by a groove 43.

### (Feature Item 14)

In the frame component 11 according to (Feature Item 12), the fitted portion 41 is formed by a slit hole 61 extending through the one vertical wall (the first vertical wall 21 or the second vertical wall 22) in a thickness direction, and a tongue piece 62 fitted in the slit hole 61 is formed at the distal end portion of the partition wall 25.

### (Feature Item 15)

In the frame component 11 according to (Feature Item 12), the fitted portion 41 includes a guide shape portion 44 connected to a side surface 42 of the one vertical wall (the first vertical wall 21 or the second vertical wall 22), and the guide shape portion 44 is formed by a tilting surface 44a extending from the side surface 42 into the fitted portion 41.

### Explanation of the Reference Numerals and Signs

1...roll forming machine, 3...plate material, 11...frame component 11, 11a...contour, 12...first closed cross section, 13...second closed cross section, 14...third closed cross section, 15...one end portion 15, 16...other end portion 16, 21...first vertical wall (side wall), 22...second vertical wall (side wall), 25...partition wall 25, 31...abutment portion 31, 32...second inner vertical wall, 33...third inner vertical wall, 34...curved portion, 42...side surface, 43...groove, 44...guide shape portion 44, 44a...tilting surface, 46...cutting tool, 47...roll, 51...angle portion, 54...penetrated portion, 61...slit hole, 62...tongue piece, L...laser beam, S1...step of forming abutment portion 31, S2...step of welding, S11...step of forming tongue piece, 41...fitted portion 41, S10...step of forming fitted portion 41

## Claims

1. A method for manufacturing a frame component including a rectangular contour in which a plurality of closed cross sections are formed by roll-forming a plate material made of a metal and having one end portion and the other end portion such that the one end portion is left outside and the other end portion is arranged inside, comprising:
a step of forming an abutment portion having a T-shaped cross section by making the other end portion of the plate material partitioning the plurality of closed cross sections abut against one side wall of the frame component; and
a step of performing welding from outside on an opposite side of the other end portion on the side wall against which the other end portion abuts, thereby welding the other end portion to the side wall.

2. The method for manufacturing a frame component formed by roll forming according to claim 1, wherein
before the step of forming the abutment portion having the T-shaped cross section, a step of forming, in the plate material, a fitted portion in which the other end portion is fitted is performed, and
the step of forming the abutment portion having the T-shaped cross section is performed by bending the plate material and thus making the other end portion abut against the side wall and fitted in the fitted portion.

3. The method for manufacturing a frame component formed by roll forming according to claim 2, wherein
the fitted portion includes a guide shape portion connected to a side surface of the side wall, and
in the step of forming the abutment portion, an angle portion formed at a distal end of the end portion slips along the guide shape portion, thereby guiding the end portion into the fitted portion.

4. The method for manufacturing a frame component formed by roll forming according to claim 3, wherein
the guide shape portion is formed by a tilting surface extending from the side surface into the fitted portion.

5. The method for manufacturing a frame component formed by roll forming according to claim 2, wherein
in the step of forming the fitted portion, a groove is formed as the fitted portion in a side surface of the plate material, and
in the step of fitting the end portion in the fitted portion, the end portion is fitted in the groove.

6. The method for manufacturing a frame component formed by roll forming according to claim 5, wherein
the groove is formed by performing cutting for the plate material.

7. The method for manufacturing a frame component formed by roll forming according to claim 5, wherein
the groove is formed by pressing a roll including a groove working portion provided on an outer peripheral portion against the plate material, rotating the roll, and transferring a shape of the groove working portion to the plate material.

8. The method for manufacturing a frame component formed by roll forming according to claim 2, further comprising a step of forming a tongue piece at the end portion of the plate material before the step of forming the abutment portion,
wherein in the step of forming the fitted portion, a slit hole extending through the plate material in a thickness direction is formed as the fitted portion, and
in the step of forming the abutment portion, the tongue piece is fitted in the slit hole.

9. The method for manufacturing a frame component formed by roll forming according to claim 2, wherein
the step of welding the end portion to the fitted portion is performed by laser welding, and
a shape of a penetrated portion formed by the laser welding is a warhead shape extending from a laser irradiation surface to the end portion.

10. The method for manufacturing a frame component formed by roll forming according to claim 1, wherein
as the plate material, a plate material made of an aluminum alloy is used, and
the step of forming the abutment portion is performed by roll forming.

11. A frame component formed, by one metal plate material, into such a shape that a pair of horizontal walls and an intermediate partition wall are arranged between a pair of vertical walls, and a plurality of frames having a rectangular cross section are continuously arranged,
wherein one end portion of the partition wall is made to abut against one vertical wall to form an abutment portion having a T-shaped cross section and welded to the one vertical wall,
the other end portion of the partition wall is formed into a curved shape and continues to an inner vertical wall that is welded to the other vertical wall while being overlaid from inside,
the inner vertical wall and the other vertical wall are overlaid and connected to each other to form a double wall, and
connecting portions between the inner vertical wall and the vertical walls and the horizontal walls are bent into a curved shape.

12. The frame component according to claim 11, wherein
a fitted portion in which the one end portion of the partition wall is fitted is formed in the one vertical wall, and
the one end portion of the partition wall is welded in a state in which the one end portion is fitted in the fitted portion.

13. The frame component according to claim 12, wherein
the fitted portion is formed by a groove.

14. The frame component according to claim 12, wherein
the fitted portion is formed by a slit hole extending through the one vertical wall in a thickness direction, and
a tongue piece fitted in the slit hole is formed at the one end portion of the partition wall.

15. The frame component according to claim 12, wherein
the fitted portion includes a guide shape portion connected to a side surface of the one vertical wall, and
the guide shape portion is formed by a tilting surface extending from the side surface into the fitted portion.
